# EUROPEAN PATENT APPLICATION

(11) **EP 4 707 004 A1**
(43) Date of publication of application: **11.03.2026**
(21) Application number: 25199010.7
(22) Date of filing: 29.08.2025
(51) Int. Cl.: B60H 1/00

(54) **ELECTRIC POWER INTEGRATED CLIMATE CONTROL UNIT, AND TRANSPORT CLIMATE CONTROL SYSTEM THEREOF**

(30) Priority: 30.08.2024 US 202418821496
(71) Applicant: Thermo King LLC, Minneapolis, MN 55420 (US)
(72) Inventor: STROUD, Adam, Minneapolis, Minnesota, 55420 (US); MADINENI, Vikram, Minneapolis, Minnesota, 55420 (US); ESAKKIAPPAN, Pradeesh, Minneapolis, Minnesota, 55420 (US); LUCKE, Christoph, Minneapolis, Minnesota, 55420 (US); SCHUMACHER, Ryan Wayne, Minneapolis, Minnesota, 55420 (US); WANG, Xiaorui, Minneapolis, Minnesota, 55420 (US); BUFFIN, Robert, Minneapolis, Minnesota, 55420 (US); KUMAR, Ashish, Minneapolis, Minnesota, 55420 (US)
(74) Representative: Haseltine Lake Kempner LLP

(57) **Abstract**

A transport climate control unit (CCU) includes an internal space, an outer housing containing the internal space, a climate control circuit, and a rechargeable electrical power source. The climate control circuit is located in the internal space. The internal space includes a first compartment defined by the outer housing. The rechargeable electrical power source is located in the first compartment of the outer housing. The rechargeable electrical power source is configured to supply electrical power that operates the climate control circuit to climate condition a climate controlled space. A transport climate control system includes a transport climate control unit attached to a transport unit.

## Description

### Field

This disclosure generally relates to electrically powered transport climate control systems. More particularly, this disclosure relates to electric power control of transport climate control systems.

### Background

A transport climate control system is generally used to control an environmental condition (e.g., temperature, humidity, air quality, and the like) within a transport unit (e.g., a container (such as a container on a flat car, an intermodal container, etc.), a truck, a box car, or other similar transport unit). Climate controlled transport units are commonly used to transport perishable items such as produce, frozen foods, and meat products. Climate controlled transport units are also used to transport passengers between locations.

The transport climate control system includes a climate control unit ("CCU") that is attached to the transport unit to control one or more environmental conditions (e.g., temperature, humidity, atmosphere, etc.) of a particular space (e.g., a cargo space, a passenger space, etc.) (generally referred to as an "internal space"). referred to as an "internal space"). The can CCU include multiple components (e.g., a compressor, one or more fans or blowers, a controller, solenoid valve(s), etc.) that require power in order to operate.

### Summary

The embodiments described herein are directed to electrically powered transport climate control systems. More particularly, embodiments described herein relate to electric power control of transport climate control systems.

In an embodiment, a transport climate control unit ("CCU") includes an internal space, an outer housing containing the internal space, a climate control circuit, and a rechargeable electrical power source. The climate control circuit is located in the internal space. The internal space includes a first compartment, and the rechargeable electrical power source (e.g., a battery) is located in the first compartment of the outer housing. The rechargeable electrical power source is configured to supply electrical power that operates the climate control circuit to climate condition a climate controlled space.

In an embodiment, a transport climate control system includes a transport CCU attached to a transport unit. The transport CCU includes an internal space, an outer housing containing the internal space, a climate control circuit, and a rechargeable electrical power source. The outer housing is attached to the transport unit. The climate control circuit is located in the internal space. The internal space includes a first compartment, and the rechargeable electrical power source is located in the first compartment of the outer housing. The rechargeable electrical power source is configured to supply electrical power that operates the climate control circuit to climate condition a climate controlled space.

### Drawings

Both described and other features, aspects, and advantages of a climate control unit ("CCU"), a transport climate control system, and a climate controlled transport unit will be better understood with the following drawings:
Figure 1A is a side view of an embodiment of a climate-controlled van.
Figure 1B is a partial side view of an embodiment of a climate-controlled straight truck.
Figure 1C is a side prospective view of an embodiment of a climate controlled transport unit and a tractor.
Figure 1D is a front prospective view of an embodiment of a climate controlled vehicle for transporting passengers.
Figure 2 is a front view of an embodiment of a climate control unit of a transport climate control system.
Figure 3 is a front perspective view of the climate control unit of Figure 2, in which an outer housing of the climate control unit is omitted, according to an embodiment.
Figure 4 is a schematic diagram of an embodiment of an electric power system for powering a transport climate control system.
Figure 5A is a schematic diagram of the electric power system in Figure 4 operating in an external power mode, according to an embodiment.
Figure 5B is a schematic diagram of the electric power system in Figure 4 operating in an internal power mode, according to an embodiment.
Figure 6 is a schematic diagram of an embodiment of a battery thermal management system for a rechargeable electrical power source in a climate control unit.
Figure 7 is a front view of another embodiment of a climate control unit of a transport climate control system. Like reference characters refer to similar features.

### Detailed Description

In the following detailed description, reference is made to the accompanying drawings, which illustrate embodiments in which the invention may be practiced. These embodiments are described in sufficient detail to enable those skilled in the art to practice what is claimed, and it is to be understood that other embodiments may be utilized without departing from the spirit and the scope of the claims. The following detailed description and the accompanying drawings, therefore, are not to be taken in a finite sense.

Different types of goods/cargo may need to be stored at specific environmental condition(s) while being stored within a transport unit. For example, perishable goods may need to be stored within a specific temperature range to prevent spoilage and liquid goods may need to be kept at a temperature above their freezing point. Also, goods having electronic components may need to be kept in environmental conditions with a lower moisture content to avoid damage to their electronic components. Passengers traveling in the transport unit may need to be kept in a climate controlled space with specific environmental condition(s) to ensure their comfort while traveling. For example, the climate controlled space containing the passengers should be at a temperature that is generally comfortable for passengers. A transport climate control system is configured to blow conditioned air into the climate controlled space of the transport unit to keep the air within the climate controlled space at the desired environmental conditions.

The embodiments described herein are directed to electrically powered transport climate control systems. More particularly, embodiments described herein relate to electric power control of transport climate control systems.

In particular, the embodiments described herein are generally directed to climate controlled transport units, transport climate control systems, and climate controlled units, in which the climate control unit contains an internal rechargeable electrical power source (e.g., a battery pack) configured to be an internal power source. In some embodiments, the internal rechargeable electrical power source is configured to provide sufficient electrical power to power a climate control circuit of the climate control unit (e.g., compressor, expansion device, sensor(s), controller, etc.) to climate condition a climate controlled space of a transport unit. For example, the internal rechargeable electrical power source is able to provide sufficient electrical power to meet the demand of the climate control circuit to continue providing climate conditioning of the climate controlled space. For example, such sufficient electrical power is both providing a sufficient amount of electrical power to meet said demand and providing said amount of electrical power for a time period of said demand. The internal rechargeable power source can advantageously ensure that the climate control unit can continue stable operation of the transport climate control system when external power is unavailable. For example, this can at ensure that when the climate control unit suddenly stops receiving external power, the battery pack can provide power and ensure continued climate conditioning to reach a destination with available external electric power and/or a destination at which the goods within the climate conditioned space can be offloaded into a different climate conditioned space (e.g., into a different climate controlled transport unit, into a climate conditioned storage facility, etc.).

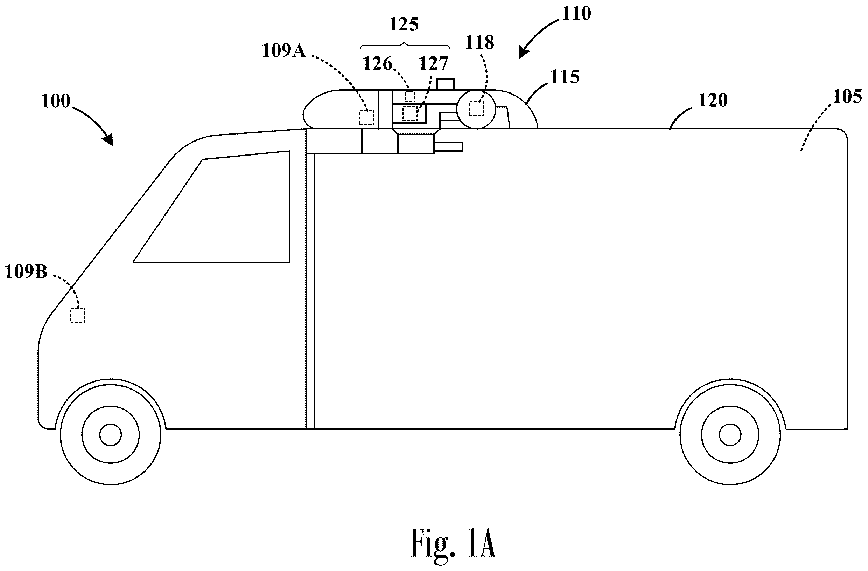

Figure 1A illustrates one embodiment of a climate-controlled van 100 that includes a climate controlled space 105 for carrying cargo and a transport climate control system 110 for providing climate control within the climate controlled space 105. The transport climate control system 110 includes a climate control unit (CCU) 115 that is mounted to a rooftop 120 of the van 100. The transport climate control system 110 can include, amongst other components, a climate control circuit 118 that connects, for example, a compressor, a condenser, evaporator(s), and an expansion device (e.g., expansion valve, expansion orifice, etc.) to provide climate control within the climate controlled space 105.

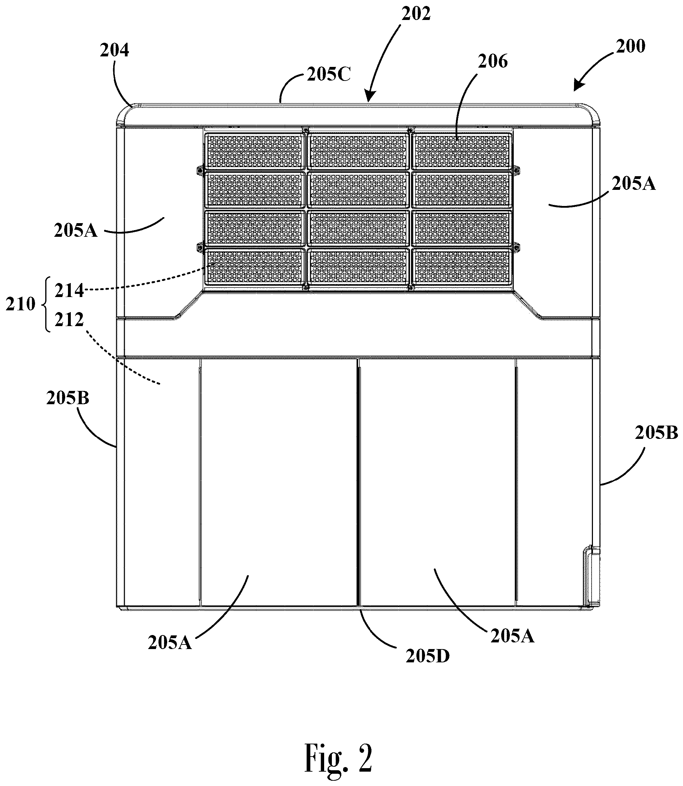

The CCU 115 includes a rechargeable electrical power source ("REPS") 109A (e.g., a battery pack) that is a power source for operating the transport climate control system 110. The transport climate control system 110 is an electric power system that does not include an engine. The REPS 109A can provide electrical power to operate the CCU 115 to provide climate conditioning of the climate controlled space 105 for a substantial period. Features of a CCU (e.g., for the CCU 115) thereof are discussed in more detail below (e.g., with respect to Figures 2 - 4).

The climate-controlled van 100 may include a battery 109B that is a power source for operating the climate-controlled van 100 and/or for providing supplemental power for the transport climate control system 110. In an embodiment, the climate-controlled van 100 may also include an engine (not shown) as a power source. The climate-controlled van 100 may be a hybrid vehicle that uses a combination of battery power and engine power or an electric vehicle that does not include an engine. In an embodiment, the climate-controlled van 100 is an electric vehicle that does not include an engine and the battery 109B provides the power for operating the climate-controlled van 100.

The transport climate control system 110 also includes a programmable climate controller 125 and one or more sensors (not shown) that are configured to measure one or more parameters of the transport climate control system 110 (e.g., an ambient temperature outside of the van 100, an ambient humidity outside of the van 100, a compressor suction pressure, a compressor discharge pressure, a supply air temperature of air supplied by the CCU 115 into the climate controlled space 105, a return air temperature of air returned from the climate controlled space 105 back to the CCU 115, a humidity within the climate controlled space 105, a temperature of the REPS 109A, etc.) and communicate parameter data to the climate controller 125. The climate controller 125 is configured to control operation of the transport climate control system 110 including the components of the climate control circuit 118. The climate controller 125 may comprise a single integrated control unit 126 or may comprise a distributed network of climate controller elements 126, 127. The number of distributed control elements in a given network can depend upon the particular application of the principles described herein.

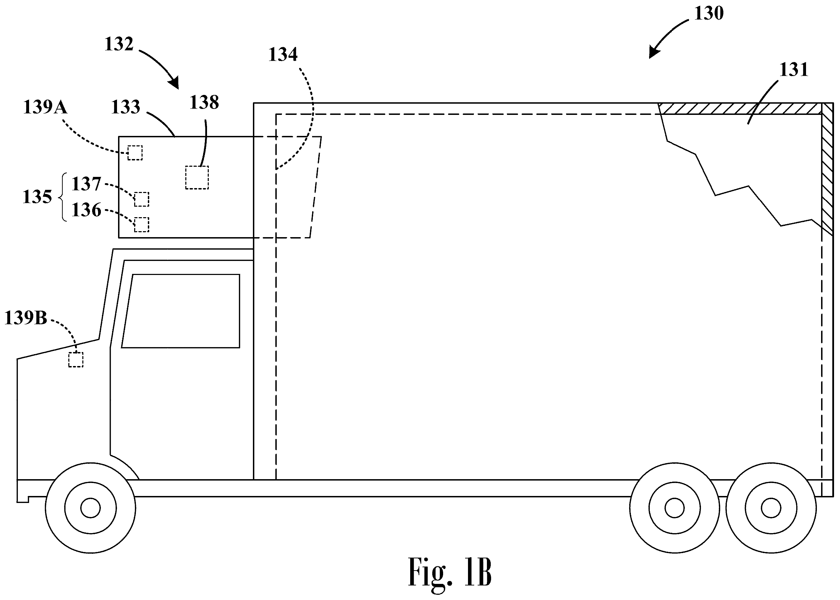

Figure 1B illustrates one embodiment of a climate-controlled straight truck 130 that includes a climate controlled space 131 for carrying cargo and a transport climate control system 132. The transport climate control system 132 includes a CCU 133 that is mounted to a front wall 134 of the climate controlled space 131. The CCU 133 can include, amongst other components, a climate control circuit 138 that connects, for example, a compressor, a condenser, an expansion device, and an evaporator to provide climate control within the climate controlled space 131.

The CCU 133 includes a REPS 139A (e.g., a battery pack) that is a power source for operating the transport climate control system 132. The transport climate control system 132 is an electric power system that does not include an engine. The REPS 139A can provide electrical power to operate the CCU 115 to provide climate conditioning of the climate controlled space 131 for a substantial period. Features of a CCU (i.e., for CCU 133) are discussed in more detail below (e.g., with respect to Figures 2 - 4).

The climate-controlled straight truck 130 may include a battery 139B that is a power source for operating the climate-controlled straight truck 130 and/or for providing supplemental power for the transport climate control system 132. In an embodiment, the climate-controlled straight truck 130 may also include an engine (not shown) as a power source. The climate-controlled straight truck 130 may be a hybrid vehicle that uses a combination of battery power and engine power or an electric vehicle that does not include an engine. In an embodiment, the climate-controlled straight truck 130 is an electric vehicle that does not include an engine and the battery 139B provides the power for operating the climate-controlled straight truck 130.

The transport climate control system 132 also includes a programmable climate controller 135 and one or more sensors (not shown) that are configured to measure one or more parameters of the transport climate control system 132 (e.g., an ambient temperature outside of the truck 130, an ambient humidity outside of the truck 130, a compressor suction pressure, a compressor discharge pressure, a supply air temperature of air supplied by the CCU 133 into the climate controlled space 131, a return air temperature of air returned from the climate controlled space 131 back to the CCU 133, a humidity within the climate controlled space 131, a temperature of the REPS 139A, etc.) and communicate parameter data to the climate controller 135. The climate controller 135 is configured to control operation of the transport climate control system 132 including components of the climate control circuit 138. The climate controller 135 may comprise a single integrated control unit 136 or may comprise a distributed network of climate controller elements 136, 137. The number of distributed control elements in a given network can depend upon the particular application of the principles described herein.

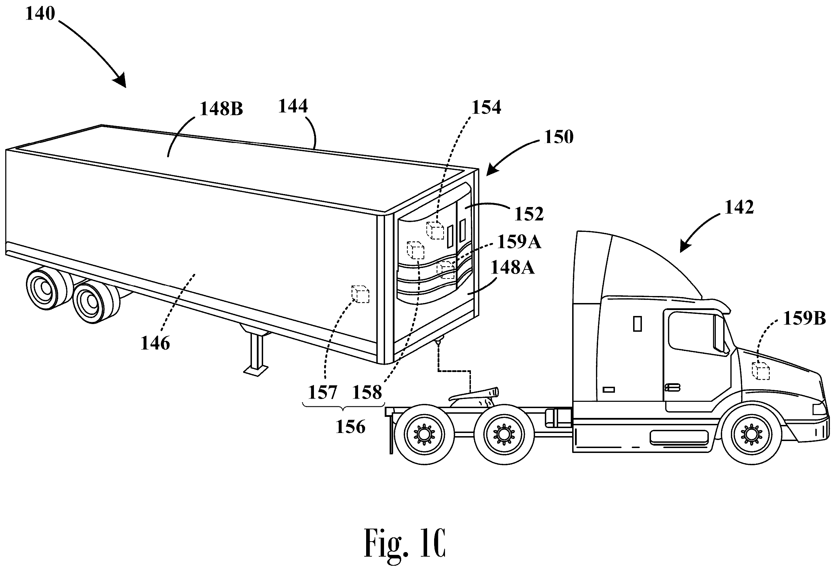

Figure 1C illustrates one embodiment of a climate controlled transport unit 140 attached to a tractor 142. The climate controlled transport unit 140 includes a transport climate control system 150 for a transport unit 144. The tractor 142 is attached to and is configured to tow the transport unit 144. The transport unit 144 shown in Figure 1C is a trailer.

The transport climate control system 150 includes a CCU 152 that provides environmental control (e.g., temperature, humidity, air quality, etc.) within a climate controlled space 146 of the transport unit 144. The CCU 152 is located on a front wall 148A of the transport unit 144. In other embodiments, it will be appreciated that the CCU 152 can be located, for example, on a rooftop 148B or another wall of the transport unit 144. The CCU 152 includes a climate control circuit 154 that connects, for example, a compressor, a condenser, an evaporator, and an expansion device to provide conditioned air within the climate controlled space 146.

The CCU 152 includes a REPS 159A (e.g., a battery pack) that is a power source for operating the transport climate control system 150. The transport climate control system 150 is an electric power system that does not include an engine. The REPS 159A can provide electrical power to operate the CCU 152 to provide climate conditioning of the climate controlled space 146 for a substantial period. Features of a CCU (i.e., for CCU 133) are discussed in more detail below (e.g., with respect to Figures 2 - 4).

The tractor 142 may include a battery 149B that is a power source for operating the tractor 142. In an embodiment, the tractor 142 may also include an engine (not shown) as a power source. The tractor 142 may be a hybrid vehicle that uses a combination of battery power and engine power (e.g., internal combustion engine, hydrogen combustion engine, etc.) or an non-internal combustion vehicle (e.g., battery powered electric vehicle, hydrogen fuel-cell powered vehicle, etc.) that does not include an engine. In an embodiment, the tractor 142 is a non-internal combustion vehicle that does not include an engine and the battery 159B provides the power for operating the tractor 142.

The transport climate control system 150 also includes a programmable climate controller 156 and one or more sensors (not shown) that are configured to measure one or more parameters of the transport climate control system 150 (e.g., an ambient temperature outside of the transport unit 144, an ambient humidity outside of the transport unit 144, a compressor suction pressure, a compressor discharge pressure, a supply air temperature of air supplied by the CCU 152 into the climate controlled space 146, a return air temperature of air returned from the climate controlled space 146 back to the CCU 152, a humidity within the climate controlled space 146, etc.) and communicate parameter data to the climate controller 156. The climate controller 156 is configured to control operation of the transport climate control system 150 including components of the climate control circuit 154. The climate controller 156 may comprise a single integrated control unit 157 or may comprise a distributed network of climate controller elements 157, 158. The number of distributed control elements in a given network can depend upon the particular application of the principles described herein.

In an embodiment, transport climate control system 150 may be a multi-zone transport climate control system (MTCS). The MTCS includes the CCU 152 and a plurality of remote units (not shown) that provide environmental control (e.g., temperature, humidity, air quality, etc.) within the climate controlled space 146 of the transport unit 144. The climate controlled space 146 can be divided into a plurality of zones separated by walls, curtains, etc. (not shown). The CCU 152 can operate as a host unit and provide climate control within a first zone (not shown) of the climate controlled space 146, and a respective remote unit can provide climate control within each other respective zone (e.g., a second zone, a third zone, etc.) of the climate controlled space 146. The CCU 152 provides working fluid (e.g., refrigerant) to a heat exchanger (e.g., an evaporator) in each operating remote unit, that conditions (e.g., heats/cools) the air within its respective zone.

In the illustrated embodiment, the transport unit 144 is a ground transport unit configured to be towed along the ground. It should be appreciated that the transport unit 144 in another embodiment may be a marine transport unit (e.g., a reefer, shipping container, etc.) configured to be transported by marine (e.g., on a ship). In some embodiments, a marine transport container can be a modular container that is configured to be transported by marine and to be placed on a wheeled frame to be towed along the ground (e.g., by a tractor 142).

For example, in conventional transport climate control systems for a transport units (e.g., ground transport units, marine transport units, etc.), the transport climate control system has generally included an engine (e.g., internal combustion engine) to independently generate power for operating the transport climate control system to provide climate conditioning. Relative to the conventional transport climate control system, the transport climate control system 150 in an embodiment does not include an engine while utilizing the REPS 159A to independently ensure power is available for operating the transport climate control system 150. For example, this can advantageously provide a weight reduction and can advantageously reduce/eliminate particulate matter and greenhouse gas emissions.

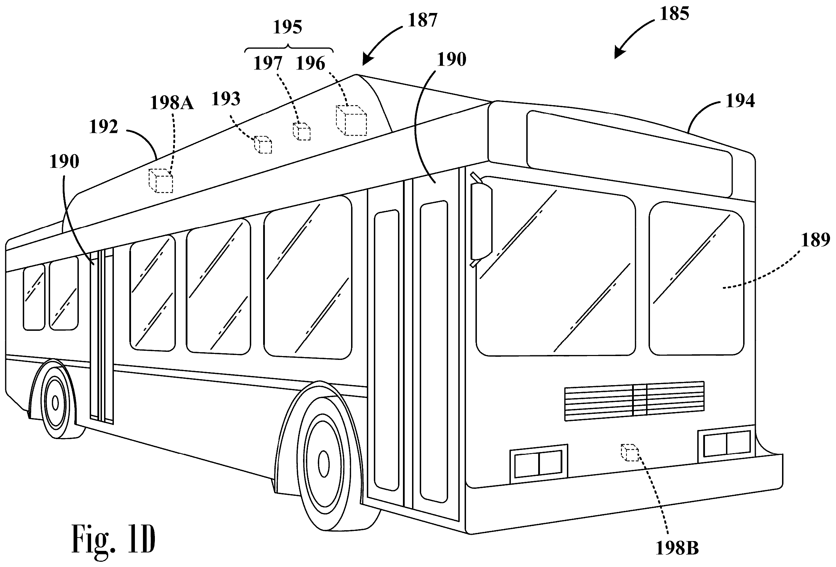

Figure 1D is a perspective view of a vehicle 185 including a transport climate control system 187, according to one embodiment. The vehicle 185 is a mass-transit bus that can carry passenger(s) (not shown) to one or more destinations. In other embodiments, the vehicle 185 can be a school bus, railway vehicle, subway car, or other commercial vehicle that carries passengers. The vehicle 185 includes a climate controlled space 189 (e.g., passenger compartment) supported that can accommodate a plurality of passengers. The vehicle 185 includes doors 190 that are positioned on a side of the vehicle 185. In the embodiment shown in Fig. 1D, a first door 190 is located adjacent to a forward end of the vehicle 185, and a second door 190 is positioned towards a rearward end of the vehicle 185. Each door 190 is movable between an open position and a closed position to selectively allow access to the climate controlled space 189.

The transport climate control system 187 includes a CCU 192 attached to a roof 194 of the vehicle 185. The CCU 192 includes a climate control circuit 193 that connects, for example, a compressor, a condenser, an evaporator, and an expansion device to provide conditioned air within the climate controlled space 189.

The CCU 170 includes a REPS 198A (e.g., a battery pack) that is a power source for operating the transport climate control system 187. In an embodiment, the transport climate control system 187 is an electric power system that does not include an engine. The REPS 198A can provide electrical power to operate the CCU 170 to provide climate conditioning of the climate controlled space 189 for a substantial period. In one example, the REPS 198A can ensure that the climate conditioning of the climate controlled space 189 is maintained for passengers during a breakdown of the vehicle 185 (e.g., until different working vehicle(s) arrive to provide transport). Features of a CCU (i.e., for CCU 170) are discussed in more detail below (e.g., with respect to Figures 2 - 4).

The vehicle 185 may include a battery 198B that is a power source for operating the vehicle 185. In an embodiment, the vehicle 185 may also include an engine (not shown) as a power source. The vehicle 185 may be a hybrid vehicle that uses a combination of battery power and engine power or an electric vehicle that does not include an engine. In an embodiment, the vehicle 185 is an electric vehicle that does not include an engine and the battery 198B provides the power for operating the vehicle 185.

The transport climate control system 187 also includes a programmable climate controller 195 and one or more sensors (not shown) that are configured to measure one or more parameters of the transport climate control system 187 (e.g., an ambient temperature outside of the vehicle 185, a space temperature within the climate controlled space 189, an ambient humidity outside of the vehicle 185, a space humidity within the climate controlled space 189, a temperature of the REPS 198A, etc.) and communicate parameter data to the climate controller 195. The climate controller 195 is configured to control operation of the transport climate control system 187 including components of the climate control circuit 172. The climate controller 195 may comprise a single integrated control unit 196 or may comprise a distributed network of climate controller elements 196, 197. The number of distributed control elements in a given network can depend upon the particular application of the principles described herein.

It will be appreciated that the embodiments described herein are not limited to the example climate controlled transport units in Figures 1A - 1D, but can apply to any type of climate controlled transport unit with a different type of transport unit (e.g., a truck, a container (such as a container on a flat car, an intermodal container, a marine container, etc.), a box car, a semi-tractor, a bus, or other similar transport unit), etc.

Figure 2 is a front view of an embodiment of a CCU 202 of a transport climate control system 200. The transport climate control system 200 is configured to condition a climate controlled space of a transport unit. The CCU 202 may be the CCU 115 in the transport climate control system 110 of the climate-controlled van 100 in Figure 1A, the CCU 133 in the transport climate control system 132 of the climate-controlled straight truck 130 in Figure 1B, the CCU 152 in the transport climate control system 150 of the climate controlled transport unit 140 in Figure 1C, or the CCU 192 in the transport climate control system 187 of the vehicle 185 in Figure 1D. In particular, the CCU 202 illustrated in Figure 2 is the same type as the CCU 152 of the climate controlled transport unit 140 in Figure 1C. It should be appreciated that in other embodiments, features discussed herein for the CCU 202 may be similarly applied to the CCU in the other types of conditioned transport vehicles in Figures 1A, 1B, and 1D.

The CCU 202 includes an outer housing 204. The outer housing 204 contains the components of the CCU 202. The components of the CCU 202 are located in an internal space 210 of the CCU 202. The internal space 210 of the CCU 202 is defined by the outer housing 204. The internal space 210 includes a first compartment 212 and a second compartment 214. The compartments 212, 214 are each defined by the outer housing 204. The first compartment 212 is the lower compartment, and the second compartment 214 is the upper compartment.

As shown in Figure 2, the outer housing 204 is formed of a plurality of outer panels 205A, 205B, 205C, 205D, 205E, 205F, 205G. For example, the compartments 212, 214 are each defined by panels 205A, 205B, 205C, 205D, 205E, 205F, 205G of the outer housing. In the illustrated embodiment, the outer housing 204 includes front outer panels 205A, side external panels 205B, a top external panel 205C, and a bottom external panel 205D. The outer housing 204 can also include a grate 206 to allow air to flow into/through the CCU 202 (e.g., grate 206 of the outer housing 204 allows ambient air to flow into the internal space 210 of the CCU 202). The outer housing 204 can also include outlet grate(s) (not shown) in the outer housing 204 (e.g., in the top, bottom, sides, etc. of the CCU 202) for discharging air from the CCU 202 (e.g., to discharge air after being heated in a condenser of the CCU 202).

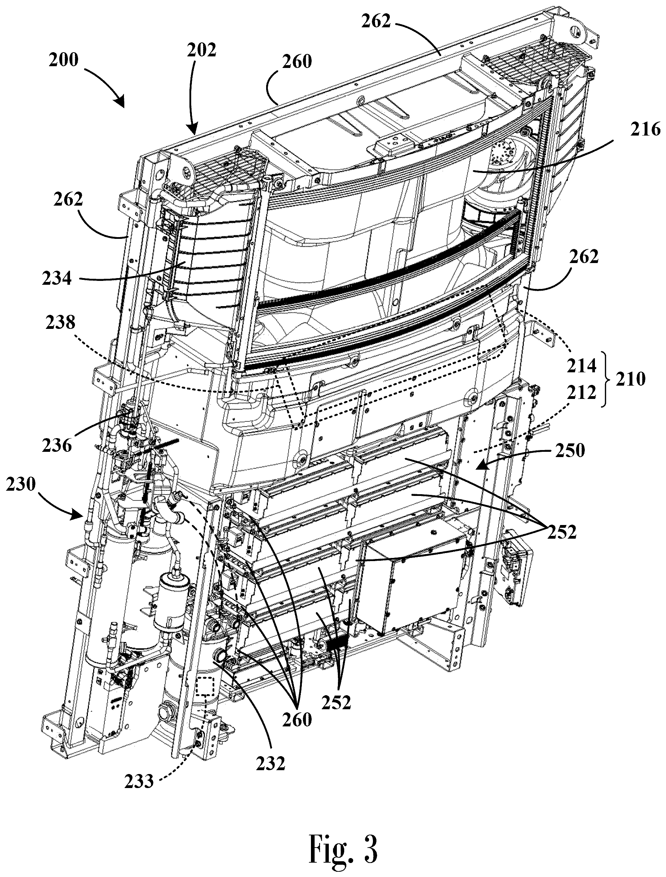

Figure 3 is a front perspective view of an embodiment of the CCU 202 with the outer housing 204 omitted. The CCU 202 is configured to be attached to a transport unit (e.g., transport unit 144 in Figure 1C). The CCU 202 has a discharge side 240 (e.g., a rear side) (generally obscured in Figure 3) for discharging conditioned air. The discharge side 260 that is attached to the transport unit. For example, the CCU 202 has a support frame 262 that is affixed to the transport unit (e.g., an outside wall of the transport unit, a front wall 148A of the transport unit 144 in Figure 1C). The outer housing 204 can be attached to the support frame 262.

The CCU 202 includes a climate control circuit 230. The climate control circuit 230 includes a compressor 232, a condenser 234, an expansion device 236, and an evaporator 238 (indicated in dashed lines as obscured in the view of Figure 3). Portions of the climate control circuit (e.g., pipe/hose segments) that extend to and from the compressor 232 are indicated in dashed lines in Figure 3. The climate control circuit 230 operates according to known principles of vapor-compression systems. The climate control circuit 230 is configured to operate in a cooling mode to provide conditioned air (e.g., cooled air) to the climate controlled space. Generally, when operating in a cooling mode, a flow of working fluid (e.g., refrigerant) in the climate control circuit 230 is from the compressor 232 to the condenser 234, from the condenser 234 to the expansion device 236, from the expansion device 236 to the evaporator 238, and from the evaporator 238 back to the compressor 232. The working fluid is compressed by the compressor 232, the compressed working fluid is cooled and at least partially condensed in the condenser 234 (e.g., by ambient air), the condensed working fluid is expanded by the expansion device 236 (which also causes cooling of the working fluid), and the expanded working fluid is then heated and evaporated in the evaporator 238. The relatively colder expanded working fluid adsorbs heat from the air flowing through the evaporator 238, which cools the air. It should be appreciated that "working fluid" as referred to herein can be one or more types of refrigerants, which may be mixed with one or more lubricant(s) and/or refrigerant additive(s) (e.g., stabilizer(s), anti-foaming agent(s), tracer(s), etc.) to form the working fluid that flows through the climate control circuit. The cooled air then flows from the evaporator 238 to the climate conditioned space.

The compressor 232 is located in the first compartment 212. The condenser 234 and the evaporator 238 are located in the second compartment 214. The CCU 202 can include a bulkhead 216 that provides an air flow path through the evaporator 238 (e.g., forms a flow path from the climate controlled space through the evaporator 238 back to the climate controlled space). The bulkhead 216 is located in the second compartment 214. As shown in Figure 3, the bulkhead 216 can divide the second compartment 214. In the illustrated embodiment, the CCU 202 does not include an engine (e.g., internal combustion engine, engine with generator, etc.). In an embodiment, the transport climate control system 200 does not include an engine (e.g., the climate controlled transport unit does not contain an engine).

The CCU 202 includes a REPS 250 (e.g., a battery pack) located within the outer housing 204 (shown in Figure 2). The REPS 250 is located in the internal space 210 of the outer housing 204. The REPS 250 is located in the first compartment 212 of the CCU 202. The location of the REPS 250 within the outer housing 204 can advantageously ensure that it remains protected from external damage (e.g., from the road, from the forklifts or other vehicles moving inside and/or around the CCU 202). For example, the REPS 250 can be positioned far enough from the road as to not need to undergo crush testing (e.g., disposed higher than 700mm off the ground), reduce/avoid gravel bombardment, and can also avoid the higher ambient temperatures that occur closer to relatively hotter asphalt. The REPS 250 is also located external to the conditioned space of the transport unit to prevent ice/condensation from building up on the REPS 250.

The REPS 250 is configured to power the CCU 202 (e.g., to power the transport climate control system 200 of the CCU 202). The REPS 250 can provide electrical power to operate the CCU 202 (e.g., to operate the transport climate control system 200) when external power is not available. External power is power provided from sources external to the CCU 202. For example, external power is not available when an external electrical power source that supplies the external power is not available (e.g., external energy source is being swapped, replaced, fueled, disconnected, etc.) or when the amount of external power available (from the external electrical power source) is insufficient. In an embodiment, the REPS can be configured to provide supplemental power to the external power to allow the CCU 202 to operate at a substantially greater capability (e.g., high cooling capacity, faster pull down speed, fast defrost speed, etc.) than capable with external power. intermittently

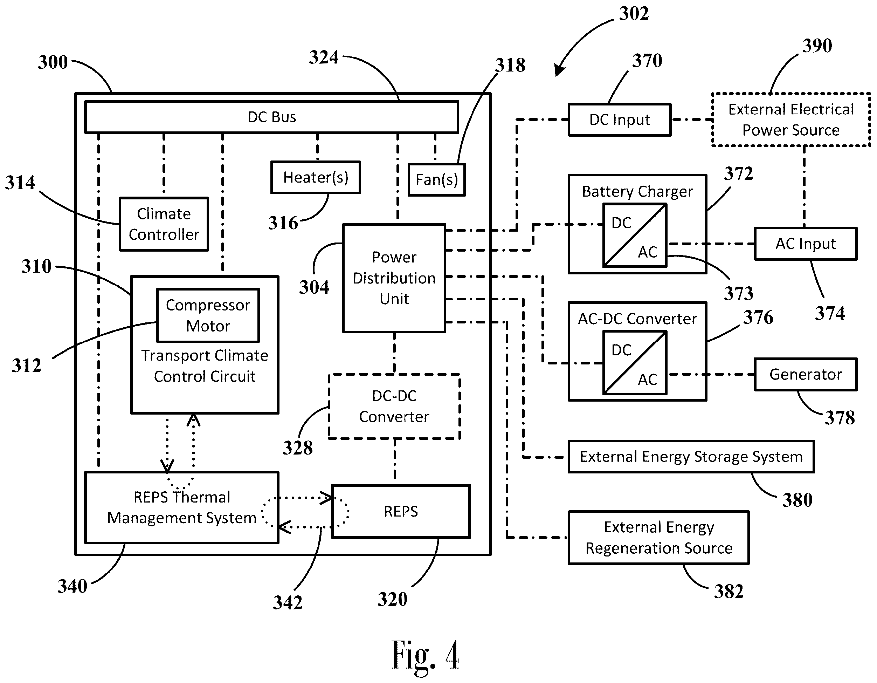

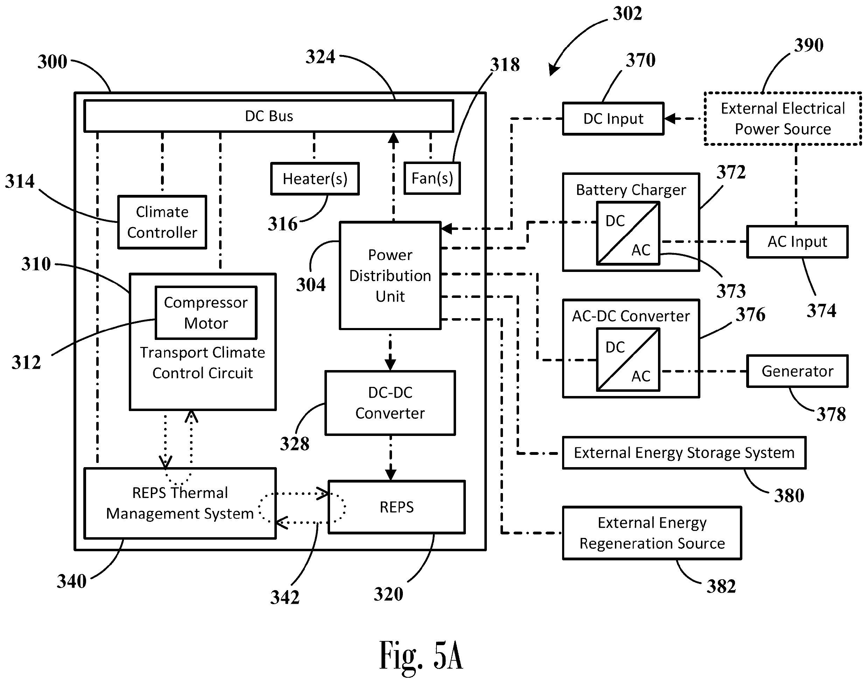

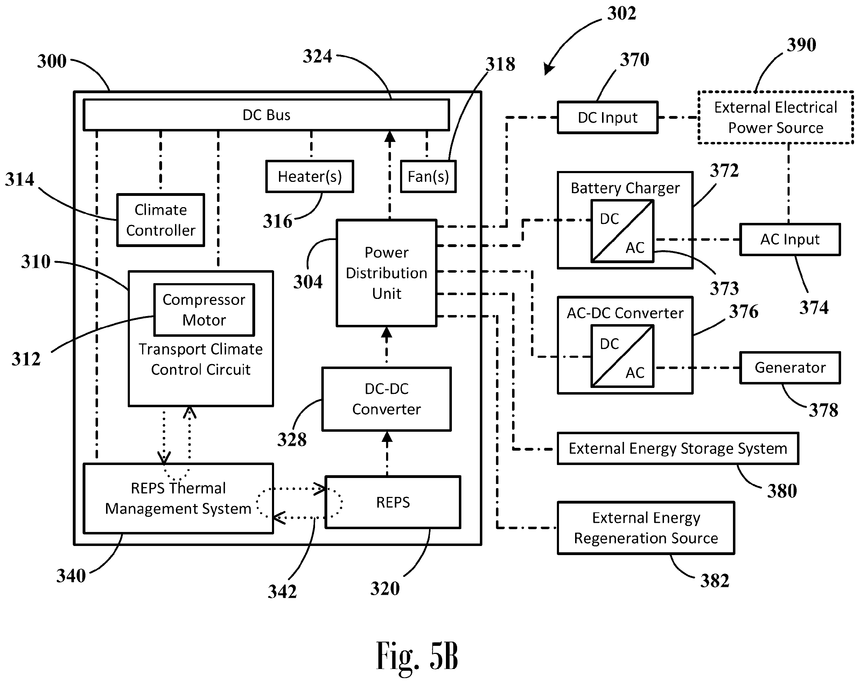

In the illustrated embodiment, the REPS 250 includes a plurality of battery modules 252 electrically connected to each other. The battery modules 252 each contain at least one battery cell (not shown). The CCU 202 includes a thermal management system () 260. The thermal management system can be referred to as a battery thermal management system ("BTMS") 260. The BTMS 260 is configured to condition (e.g., cool and/or heat) the REPS 250. In an embodiment, the BTMS 260 can be configured to cool the REPS 250 using the climate control circuit 230. For example, the BTMS 260 can include a coolant circuit (e.g., cooling circuit 342 in Figure 4, etc.) that circulates coolant through the REPS 250. In another example, the coolant circuit may be a portion of the climate control circuit 230, and the coolant is a portion of the working fluid (e.g., the expanded working fluid) that flows through the REPS 250. In another embodiment, the CCU 202 may include a second climate control circuit (not shown) (e.g., a secondary vapor-compression circuit, climate control circuit 230 in Figure 5) that provides cooling to the REPS 250. In another embodiment, the BTMS 260 may be configured to be air cooled (e.g., by directing air through the CCU 202, indirectly by air cooling a coolant circulated in the cooling circuit through the REPS 250). In some embodiments, the BTMS 260 may be configured to also heat the REPS 250 (e.g., during lower ambient temperatures). In an embodiment, the BTMS 260 may include an electric heater (e.g., heater 316 in Figure 4, etc.) configured to heat the coolant in the BTMS 260 (e.g., heat the coolant in coolant circuit 342 in Figure 4, etc.). An electrical configuration of a REPS 250 is described in more detail below.

The REPS 250 is configured to supply electrical power for operating the climate control circuit 230 to provide climate conditioning to the climate controlled space. The climate control circuit 230 is capable of operating with the REPS 250 providing the amount of electrical power to meet the electrical load of the climate control circuit 230. The REPS 250 provides electrical power at a current and a voltage for operating the climate control circuit 230. In particular, the REPS 250 provides electrical power for powering the compressor 232 of the climate control circuit 230 (e.g., to power the motor 233 of the compressor 232). The electrical power powering the compressor 232 (e.g., powering the motor 233 of the compressor 232) to compress working fluid (e.g., refrigerant) in the climate control circuit 230 for providing climate conditioning. The CCU 202 may include one or more electrical heater(s) (e.g., electrical heater(s) 316 in Figure 4, etc.). The electrical heater(s) may be configured to provide defrosting (e.g., of the evaporator 238, etc.), used for a heating mode, etc. REPS 250 can also provide power for the heater(s). In particular, REPS 250 provides electrical power for powering the electrical heater(s) when operating in the CCU 202 and the climate control circuit 230 in a heating mode. In an embodiment, said electrical heater(s) may be in the form of heater bars that operate in a heating mode to provide heating of the climate controlled space.

In an embodiment, the REPS 250 is configured to provide at least 20 kilowatt hours of electrical power for operating the climate control circuit 230 to provide the climate conditioning to the climate controlled space. In an embodiment, the REPS 250 is configured to provide at least 25 kilowatt hours of electrical power for operating the climate control circuit 230 to provide the climate conditioning to the climate controlled space. In an embodiment, the REPS 250 is configured to provide at least 30 kilowatt hours of electrical power for operating the climate control circuit 230 to provide the climate conditioning to the climate controlled space. In an embodiment, the REPS 250 is configured to provide at least 30 kilowatt hours of electrical power for operating the climate control circuit 230 to provide the climate conditioning to the climate controlled space.

In an embodiment, the REPS 250 is configured to provide sufficient electrical power to operate the climate control circuit 230 to provide climate conditioning to the climate controlled space for at least two hours. In an embodiment, the REPS 250 is configured to provide sufficient electrical power to climate control circuit 230 for the climate control circuit to provide climate conditioning to the climate controlled space for a set period of time (e.g., at least four hours). The electrical power supplied by the REPS 250 is sufficient to operate the climate control circuit in a cooling mode at full capacity. For example, the REPS 250 may be configured to supply the electrical power sufficient to operate the climate control circuit 230 in the cooling mode at the full capacity for a maximum capacity set period of time (e.g., at least one hour). The REPS 250 can be configured to supply electrical power that powers the climate control circuit operating in the cooling mode at the full capacity during an entirety of a state of charge of the REPS (e.g., from 100% charged to 1% charged). For example, the REPS 250 is configured to provide sufficient power (both in voltage and current) to power the climate control circuit operating in the cooling mode at the full capacity while at least some charge remaining. When operating the climate control circuit 230 at full capacity, the compressor 232 of the climate control circuit 230 operates at full power (e.g., at the maximum speed of the compressor 232, operating the motor 233 of the compressor 232 at maximum speed, etc.). For example, the REPS 250 supplies sufficient voltage and current for the compressor 232 to operate at its full power. The REPS 250 can also supply sufficient electrical power for powering the other electrical components of the CCU 202 used in operating and controlling the climate control circuit 230 (e.g., fan(s), controller, sensor(s), electric heater(s), etc.).

As the REPS 250 is located within the CCU 202, the REPS 250 can ensure continued stable operation of the transport climate control system 200 when external power is unavailable. For example, the REPS 250 allows for the transport climate control system 200 to continuing conditioning of the climate conditioned space for a time period sufficient to reach a destination with available external electric power for the CCU 202 and/or a destination at which the goods within the climate conditioned space can be offloaded into a different climate conditioned space (e.g., into a different climate controlled transport unit, into a climate conditioned storage facility, etc.).

Figure 4 is a schematic diagram of an embodiment of an electrical power system 302 of a CCU 300. The CCU 300 is employed in a transport climate control system. For example, the CCU 300 in an embodiment may be the CCU 202 of the transport climate control system 200 in Figures 2 - 3. For example, the CCU 300 includes a transport climate control circuit 310 (e.g., transport climate control circuit 230 in Figure 2) and a REPS 320 (e.g., REPS 250 in Figure 2). The dotted dashed lines indicate electrical connections between different components, and dotted lines indicate fluid connections between different components.

As shown in Figure 4, the CCU 300 includes the REPS 320, a power distribution unit 304, and a direct current (DC) bus 324. The power distribution unit 304 and the DC bus 324 supply electrical power (e.g., DC electrical power) to the electrical load components of the CCU 300. The electrical load components of the CCU 300 are electrically connected to the DC bus 324 and receive electrical power from the DC bus 324. Electrical power received by the power distribution unit 304 is supplied to the DC bus 324, which is then distributed via the DC bus 324 to said electrical load components. For example, the electrical load components of the CCU 300 may include, but are not limited to, a compressor motor 312, a climate controller 314, one or more heater(s) 316 (e.g., used for defrosting, used for a heating mode, etc.), one or more fan(s) 318, and/or a REPS thermal management system 340. The heater(s) 316 may be one or more of a resistive heater, a negative temperature coefficient ("NTC") heater, positive temperature coefficient ("PTC") heater, etc. and may be controlled, for example, via switching element (not shown). In an embodiment, the REPS may also provide electrical power to auxiliary electrical components of the transport unit located outside the CCU 300 (e.g., lift gate of the transport unit, etc.). The compressor motor 312 is the motor of a compressor in the climate control circuit 310 (e.g., motor 233 of compressor 223 in Figure 3). For example, the climate controller 314 is configured to control operation of the CCU 220 (e.g., is the climate controller 125 in Figure 1A, the climate controller 135 in Figure 1B, the climate controller 156 in Figure 1C, the climate controller 195 in Figure 1D, etc.).

In an embodiment, the REPS 320 may be a lower voltage REPS. For example, a lower voltage REPS has an output voltage of less than 60 volts (e.g., an output voltage in a range of less than 60 voltages and at or greater than 20 volts). In such an embodiment, the CCU 300 includes a DC-DC converter 328 that electrically connects the REPS 320 to the power distribution unit 304. The DC-DC converter 328 is configured to convert the voltage of the electrical power flowing between the REPS 320 and the power distribution unit 304. For example, the DC-DC converter 328 converts the electrical power supplied from the lower voltage of the REPS 320 to the higher voltage of the DC bus 324. For example, the DC-DC converter 328 converts the electrical power supplied from the power distribution unit 304 to the REPS 320 from a higher voltage (e.g., the higher voltage of the DC bus 324) to the lower voltage of the REPS 320. The lower voltage REPS advantageously is less hazardous (e.g., is classified as non-hazardous) and may more easily utilize external sources having different voltages. For example, the lower voltage REPS can advantageously allow for easier servicing of the CCU 300, as the lower voltage allows for servicing without specialized tools and without the higher protections required for servicing systems with higher voltages. In an embodiment, the lower voltage REPS has a working voltage range of 32V to 55V.

In another embodiment, the REPS 250 may be a higher voltage REPS that has an output voltage that is the same as the voltage of the DC bus 324. For example, the higher voltage REPS has an output voltage of at or greater than 60 volts. In one example, the higher voltage REPS can have an output voltage in the range of 60 - 1500 volts. The higher voltage REPS can have an output voltage that is the same as the voltage of the DC bus 324. In such an embodiment, the electrical power of the REPS 320 may be directly supplied to the power distribution unit 304 (i.e., omits the DC-DC converter 328 as shown in Figure 4). The higher voltage REPS can advantageously electrically couple to the DC bus 324 without a power converter and supply electrical power more efficiently.

In another embodiment, the REPS 320 may be a higher voltage REPS that has an output voltage that partially overlaps with the voltage of the DC bus 324 (e.g., an output voltage that varies between being equal to and different from the voltage of the DC bus 324). In such an embodiment, the electrical power of the REPS 320 may be directly supplied to the power distribution unit 304 (i.e., omits the DC-DC converter 328 as shown in Figure 4). When the output voltage of the higher voltage REPS is equal to the voltage of the DC bus 324, the electrical power may flow to the DC bus 324 without conversion by the DC-DC converter 328. When the output voltage of the higher voltage REPS is different from the voltage of the DC bus 324, the DC-DC converter 328 converts (e.g., by bucking or boosting) the output voltage from the higher voltage REPS to the voltage of the DC bus 324.

In an embodiment, the REPS 320 is a battery pack that includes a plurality of battery modules (not shown) (e.g., battery modules 252 in Figure 3) that are electrically connected. The REPS 320 can include a REPS management controller (not shown) and each of the battery modules includes a battery module controller (not shown), and the REPS management controller can communicate with the battery module controllers in the REPS. For example, the battery modules are connected in series in the higher voltage REPS. For example, the battery modules are connected in parallel in the lower voltage REPS. For example, the battery modules can be connected in parallel and series. The REPS 320 may include a plurality of groups of battery modules, in which the battery modules in each group are arranged in parallel, and the plurality of groups are arranged in series with each other. For example, in Figure 3, the REPS 320 includes four groups of batteries in series, with each group of batteries including two batteries. In an embodiment, REPS 320 is configured to have a number of groups of battery modules to provide a desired current (e.g., desired current to operate the CCU 330 to operate at maximum conditioning) and the number of batteries in each group to provide a desired voltage.

The CCU 300 is configured to charge the REPS 320 using external electrical power. The external electrical power being supplied from outside of the CCU 300 (e.g., supplied from a power source external to the outer housing of the CCU 300). The external electrical power is received by the power distribution unit 304 which supplies the external electrical power to the REPS 320. The power distribution unit 304 may be configured to receive external electric power from one or more of the external power sources discussed below.

External electric power may be utility electric power provided from an external electrical power source 390. The utility electrical power may be, but not limited to, grid power (e.g., power from the electrical grid), facility power (e.g., power generated at a facility that the climate controlled transport unit is parked at), etc. The electrical power system 302 may include a DC input 370 (e.g., a DC plugin/socket) electrically connected to the power distribution unit 304 for receiving DC electrical power from the external electrical power source 390. The electrical power system 302 may include an AC input 374 (e.g., an AC plugin/socket) for receiving AC electrical power from an external electrical power source 390, and an on-board battery charger 372 with an AC-DC converter 373. The AC-DC converter 373 converts the AC electrical power supplied from the external electrical power source 390 to DC electrical power received by the power distribution unit 304. It should be appreciated that the external electrical power source 390 may also include typical electrical components used for providing electrical charging/operating power to an electric vehicle and/or CCU (e.g., DC electric vehicle supply equipment ("EVSE"), AC EVSE, etc.)

External electric power may be supplied from a generator 378. The generator 378 may be an alternator and engine of a vehicle of the CCU 300 (e.g., alternative and engine of the climate-controlled van 100 in Figure 1A, of the climate-controlled straight truck 130 in the Figure 1B, of the tractor 142 in Figure 1C, of the vehicle 185 in Figure 1D, etc.). The generator 378 may be an alternator that connects to and receives mechanical power from an engine of an attached tractor (e.g., tractor 142 in Figure 1C, etc.). For example, the electrical power output from the generator 378 may be ePTO electric power takeoff ("ePTO") (not shown) supplied from the attached tractor. The external electric power is supplied from a generator 378 to the power distribution unit 304 via an AC-DC converter 376. The AC-DC converter 376 converts the AC electrical power supplied from the generator to DC electrical power received by the power distribution unit 304.

External electric power may be supplied from an external energy storage system 380. For example, the external energy storage system 380 may be an external battery, a fuel cell, etc. The external energy storage system 380 may be located on the transport unit on which the CCU 300 is mounted or may be located in a tractor towing a transport unit conditioned by the CCU 300 (e.g., tractor 142 in Figure 1C, etc.). The external battery is a battery external to the CCU 300 (e.g., external to the outer housing of the CCU 300). For example, the external battery may be provided on/in the climate controlled transport unit of the CCU 300 or maybe a battery of a tractor towing a transport unit conditioned by the CCU.

External electrical power may be supplied from an external energy regeneration source of the climate controlled transport unit of the CCU 300. For example, the energy regeneration source 382 may include a solar panel, an axel generator, etc.

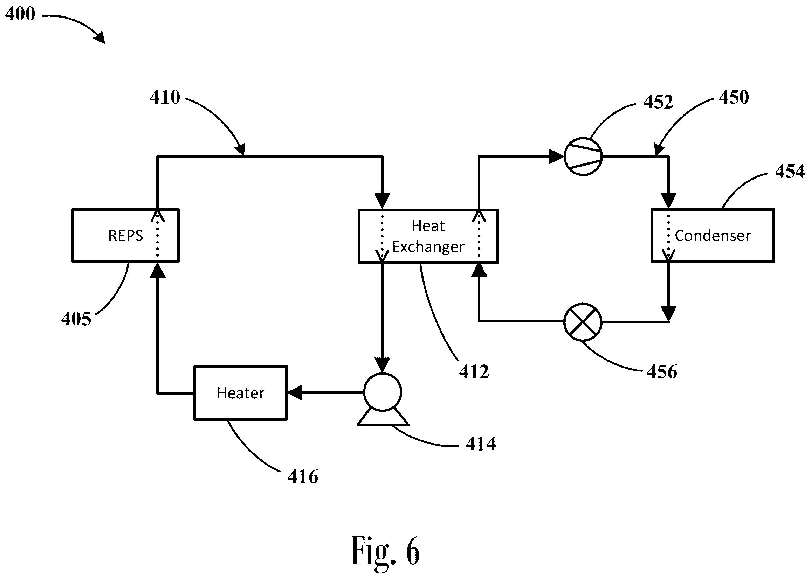

The thermal management system 340 is configured to cool the REPS 320. In some embodiments, the REPS thermal management system 340 may also be configured to provide heating to the REPS 320. For example, the REPS thermal management system 340 is configured to maintain a temperature of the REPS 250 to be in a predetermined range. The REPS thermal management system 340 circulates a battery coolant through the REPS 320 to cool the REPS 320. In an embodiment, the thermal management system 340 may include a heater (e.g., heater 416 in Figure 6), and the thermal management system 340 can be configured to heat the REPS 320 (e.g., in a heating mode).

As shown in Figure 4, the REPS thermal management system 340 can include a REPS coolant circuit 342 containing the REPS coolant, and the REPS coolant circuit 342 is configured to circulate the coolant (i.e., the cooled or heated coolant) through the REPS 320 to cool or heat the REPS 320. In one example, the REPS 320 can include one or more cooling plates or channels (e.g., mounted to the battery modules of the REPS 320) and the coolant may flow through the cooling plate(s)/channel(s) to cool and heat the REPS 320.

Figure 5A is a schematic diagram of the electrical power system 302 of the CCU 300 in Figure 4 operating in an external power mode, according to an embodiment. In the external power mode, external electrical power is supplied to the power distribution unit 304 of the CCU 300. In the illustrated embodiment, the external electrical power is provided from the external electrical power source 390. It should be appreciated that in other embodiments, the external electrical power may be provided from a different source or combination of sources than the external electrical power source 390 (e.g., from one or more of the external electrical power source 390, the generator 378, the external energy storage system 380, and the external energy regeneration source 382).

As shown in Figure 5A, the power distribution unit 304 supplies the external electrical power to the DC bus 324 and to the REPS 320 via the DC-DC converter 328. When the external power is different from a charging voltage for the REPS 320, the DC-DC converter 328 converts the external power to the charging voltage and supplies the converted external power to the REPS 320. When the voltage of the external power is at the charging voltage for the REPS 320, the electrical power can be supplied from the power distribution unit 304 to the REPS 320 without a voltage conversion from the DC-DC converter 328. In this embodiment, the PDU 304 prioritizes powering the DC bus 324 and only use excess power from the external power source (e.g. 390) for charging the REPS 320.

Figure 5B is a schematic diagram of the electrical power system 302 of the CCU 300 in Figure 4 operating in an internal power mode, according to an embodiment. In the internal power mode, the REPS 320 supplies electrical power to the DC bus 324 sufficient to power the CCU 300. In particular, the REPS 320 is able to supply electrical power at a current and a voltage sufficient for operating the CCU to provide a desired amount of climate conditioning, as discussed herein. The DC-DC converter 328 can convert voltage of the electrical power output by the REPS 320 to voltage of the DC bus 324. The DC-DC converter 328 may also control an amount of electrical power (i.e., an amount of electrical current and voltage) discharged from the DC-DC converter to the power distribution unit to be at the desired amount for operating the CCU 330.

For example, when the output voltage of REPS 320 is equal to the voltage for the DC bus 324, the electrical power can be supplied from the REPS 320 via the power distribution unit and the DC-DC converter 328 (without the DC-DC converter converting voltage). For example, when the output voltage of REPS 320 is less than the voltage for the DC bus 324, the electrical power can be supplied from the REPS 320 via the power distribution unit and the DC-DC converter 328, with the DC-DC converting the electrical power from the REPS output voltage to the higher voltage of the DC bus 324. For example, when the output voltage of REPS 320 is greater than the voltage for the DC bus 324 (e.g., the lower voltage for the low voltage conditioning mode or the like), the electrical power can be supplied from the REPS 320 via the power distribution unit and the DC-DC converter 328, with the DC-DC converting the electrical power from the output voltage to the lower voltage of the DC bus 324.

Figure 6 is a schematic diagram of an embodiment of a REPS thermal management system 400 for conditioning a REPS 405. The REPS thermal management system 400 and the REPS 405 are employed in a CCU. For example, the REPS thermal management system 400 and the REPS 405 in Figure 6 may respectively be the REPS thermal management system 340 and the REPS 320 of CCU 300 in Figure 4.

As shown in Figure 6, the thermal management system 400 includes a REPS coolant circuit 342 and a climate control circuit 450. The REPS cooling circuit 410 includes a heat exchanger 412, a pump 414, and the REPS 405. The climate control circuit 450 includes a compressor 452, a condenser 454, an expansion device (e.g., expansion valve, expansion orifice, etc.), and the heat exchanger 412. The climate control circuit 450 operates according to known principles of vapor-compression systems. In a cooling mode, relatively colder working fluid (e.g., containing refrigerant(s)) in the climate control circuit 450 flows from the expansion device 456 to and through the heat exchanger 412 and cools the coolant in the REPS cooling circuit 410 separately flowing through the heat exchanger 412. The cooled coolant in the REPS cooling circuit 410 than flows to and through the REPS 405 and cools the REPS 405. For example, the condenser 454 may utilize external ambient air to cool the working fluid in the climate control circuit 450.

As shown in Figure 5, the REPS cooling circuit 410 may include a heater. In a heating mode, the coolant in the REPS cooling circuit 410 is heated while flowing through the heater 416, and the heated coolant is then directed through the REPS 405 to heat the REPS 405. In the hating mode, the climate control circuit 450 may be inactive.

In the illustrated embodiment of Figure 6, the climate control circuit 450 is a different climate control circuit from a primary climate control circuit in the CCU (e.g., transport climate control circuit 230 in Figure 3, transport climate control circuit 310 in Figure 4). In another embodiment, the climate control circuit 450 may be the primary climate control circuit. In such an embodiment, the climate control circuit 350 in Figure 6 also includes an evaporator (not shown) (e.g., evaporator 238 in Figure 3) that is provided downstream of the expansion device 456 and upstream of the compressor 452 in series or parallel with the heat exchanger 412. For example, in the parallel configuration, a first portion of the working fluid can flow through the heat exchanger 412 to cool the coolant in the coolant circuit 410 and a second portion of the working fluid can flow through the evaporator. The climate control circuit 450 may include valve(s) (not shown) and/or a second expansion valve (not shown) (e.g., in parallel with the expansion device 456) to control the flow of amount of working fluid directed through the heat exchanger 412.

In some embodiments, the working fluid in the climate control circuit 450 may also flow directly through the REPS 405 (i.e., without the coolant circuit 410). For example, the REPS 405 in Figure 6, can be disposed in climate control circuit 450 in the place of the heat exchanger 412.

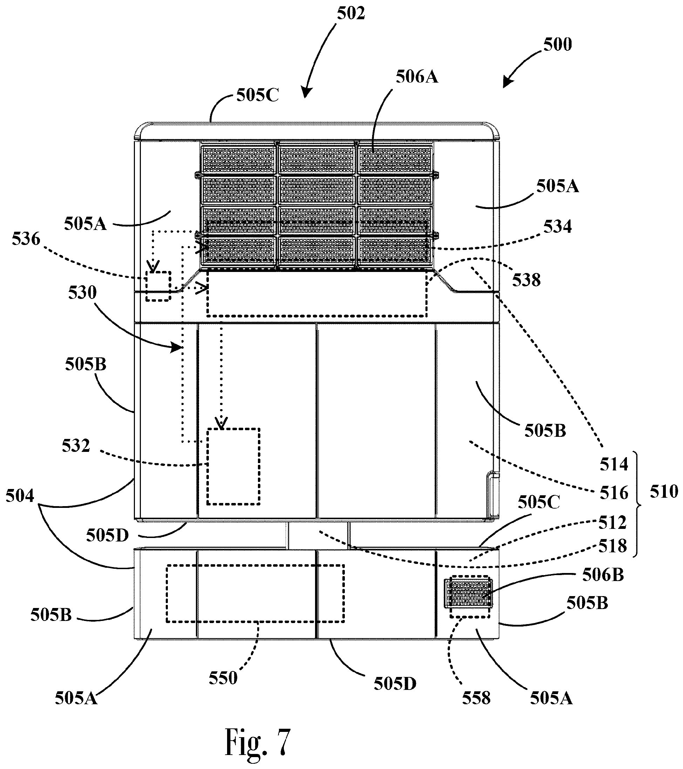

Figure 7 is a front view of an embodiment of a CCU 502 of a transport climate control system 500. The transport climate control system 500 is configured to condition a climate controlled space of a transport unit. The CCU 502 may be the CCU 115 in the transport climate control system 110 of the climate-controlled van 100 in Figure 1A, the CCU 133 in the transport climate control system 132 of the climate-controlled straight truck 130 in Figure 1B, the CCU 152 in the transport climate control system 150 of the climate controlled transport unit 140 in Figure 1C, or the CCU 192 in the transport climate control system 187 of the vehicle 185 in Figure 1D. In particular, the CCU 502 illustrated in Figure 7 is a CCU that is mounted to a climate controlled transport unit, similar to CCU 152 of the climate controlled transport unit 140 in Figure 1C. It should be appreciated that in other embodiments, features discussed herein for the CCU 502 may be similarly applied to the CCU in the other types of conditioned transport vehicles in Figures 1A, 1B, and 1D.

The CCU 502 includes an outer housing 504. The outer housing 204 contains the components of the CCU 502. The components of the CCU 502 are located in an internal space 510 of the CCU 502. As shown in Figure 2, the outer housing 504 is formed of a plurality of outer panels 505A, 505B, 505C, 505D, 505E, 505F, 505G. For example, the compartments 512, 514, 516 are each defined by panels 505A, 505B, 505C, 505D, 505E, 505F, 505G of the outer housing 504. In the illustrated embodiment, the outer housing 504 includes front outer panels 505A, side external panels 505B, top external panels 505C, and bottom external panels 505D. The outer housing 504 can also include grates 506A, 506B to allow air to flow into/through the CCU 502 (e.g., grate 506 of the outer housing 504 allows ambient air to flow into the internal space 510 of the CCU 502). The outer housing 204 can also include outlet grate(s) (not shown) in the outer housing 504 (e.g., in the top, bottom, sides, etc. of the CCU 202) for discharging air from the CCU 502 (e.g., to discharge air after being heated in a condenser of the CCU 502).

The internal space 510 of the CCU 502 is defined by the outer housing 504. The internal space 510 includes a first compartment 512, a second compartment 514, and a third compartment 516. The compartments 512, 514, 516 are each defined by the outer housing 504. The first compartment 512 is a lower compartment, the second compartment 514 is an upper compartment, and the third compartment 516. In Figure 7, short dash lines are used to indicate internal features that are obscured by the outer housing 504 (e.g., contained within the outer housing 504), and dotted lines are used to indicate fluid flows between different components.

As shown in Figure 7, the first compartment 512 is spaced apart from the second and third compartments 514, 516. The internal space 510 includes a passageway 518 defined by the outer housing 504 that connects the first compartment 512 to the second and third compartments 514, 516 (e.g., the passageway 518 directly connects the first compartment 512 to the third compartment 516).

The CCU 502 can generally include components as similarly discussed for the CCU 202 in Figure 3 and/or the CCU 300 in Figures 4 - 5B. For example, similar to the CCU 202 in Figure 3, the CCU 502 includes a climate control circuit 530 disposed within the outer housing 504 that includes a compressor 532, a condenser 534, an expansion device 536, and an evaporator 538 that are fluidly connected, and a REPS 550 disposed within the outer housing 504. The compressor 532, a condenser 534, an expansion device 536, and an evaporator 538 are located in the second and third compartments 514, 516. For example, the condenser 534 and the evaporator 538 are located in the second compartment 514. For example, the compressor 532 is located in the third compartment 516.

The REPS 550 is disposed in first compartment 512. The outer housing 504 can include the grate 506B located on the first compartment 512. The REPS 550 may include one or more fan(s) 558 that circulate ambient air through the first compartment 512 to provide air cooling of the REPS 550. In an embodiment, the REPS 550 may include a thermal management system for climate conditioning (e.g., heating and/or cooling) the REPS 550 (e.g., the thermal management system 260 in Figure 3, the thermal management system 340 in Figures 4 - 5B, the thermal management system 400 in Figure 6). The thermal management system can include coolant circuit (e.g., coolant circuit 342 in Figure 4, coolant circuit 410 in Figure 6) and/or a second climate control circuit (e.g., climate control circuit 450 in Figure 6). In such an embodiment, the coolant circuit and the second climate control circuit may be located in the first compartment 512.

### Aspects:

Any of Aspects 1 - 13 may be combined with any of Aspects 14 - 19.

Aspect 1. A transport climate control unit (CCU) comprising:
an internal space including a first compartment;
an outer housing containing the internal space, the first compartment defined by the outer housing;
a climate control circuit located in the internal space; and
a rechargeable electrical power source ("REPS") located in the first compartment of the outer housing, the REPS configured to supply electrical power that operates the climate control circuit to climate condition a climate controlled space.

Aspect 2. The transport CCU of Aspect 1, wherein the REPS is configured to supply the at least 20 kilowatt hours of electrical power that operates the climate control circuit to provide the climate conditioning to the climate controlled space.

Aspect 3. The transport CCU of any one of Aspects 1 - 2, wherein the climate control circuit includes a compressor, the REPS configured to supply the electrical power that powers the compressor to compress working fluid in the climate control circuit, to provide the climate conditioning to the climate controlled space.

Aspect 4. The transport CCU of any one of Aspects 1 - 3, wherein the REPS is configured to supply the electrical power that powers the climate control circuit operating in a cooling mode at full capacity.

Aspect 5. The transport CCU of Aspect 4, wherein the REPS is configured to supply the electrical power that powers the climate control circuit operating in the cooling mode at the full capacity during an entirety of a state of charge of the REPS.

Aspect 6. The transport CCU of any one of Aspects 1 - 5, wherein the climate control circuit is configured to climate condition the climate controlled space using the electrical power from the REPS without receiving electrical power from outside the outer housing.

Aspect 7. The transport CCS of any one of Aspects 1 - 6, wherein the climate control circuit includes a compressor located in the first compartment.

Aspect 8. The transport CCS of any one of Aspects 1 - 7, comprising:
a thermal management system configured to circulate a coolant through the REPS, the climate control circuit being configured to selectively cool and heat the coolant circulating through the REPS.

Aspect 9. The transport CCU of any one of Aspects 1 - 8, wherein
the REPS has an output voltage of the electrical power in a range of 60V - 1500V, the REPS including a plurality of battery modules in series and one or more of the plurality of battery modules in parallel, or
the REPS has an output voltage of less than 60V, the REPS including a plurality of battery modules in parallel only.

Aspect 10. The transport CCS of any one of Aspects 1 - 9, wherein
the internal space includes a second compartment defined by the outer housing, and
the climate control circuit includes an evaporator configured to conditioned air for the climate controlled space, the evaporator located in the second compartment of the outer housing.

Aspect 11. The transport CCU of any one of Aspects 1 - 10, wherein the outer housing is formed of external panels, the one or more of the external panels defining the first compartment.

Aspect 12. The transport CCU of any one of Aspects 1 - 11, wherein the CCU does not contain an engine.

Aspect 13. The transport CCS of any one of Aspects 1 - 12, wherein
the internal space includes a second compartment defined by the outer housing, the first compartment spaced apart from the first compartment, and
the climate control circuit includes a compressor, the compressor disposed in the second compartment.

Aspect 14. A transport climate control system, comprising:
a transport climate control unit (CCU) attached to a transport unit, the CCU including:
an internal space including a first compartment;
an outer housing attached to the transport unit, the outer housing containing the internal space, and the first compartment defined by the outer housing;
a climate control circuit located in the internal space; and
a REPS located in the first compartment of the outer housing, the REPS configured to supply electrical power to the climate control circuit for operating the climate control circuit to provide climate conditioning to a climate controlled space.

Aspect 15. The transport climate control system of Aspect 14, comprising:
a thermal management system configured to circulate coolant through the REPS, the climate control circuit configured to selectively cool and heat the coolant circulating through the REPS.

Aspect 16. The transport climate control system of any one of Aspects 14 - 15, wherein the transport climate control system does not include an engine.

Aspect 17. The transport climate control system of any one of Aspects 14 - 16, wherein the climate control circuit is configured to climate condition the climate controlled space using the electrical power from the REPS without receiving electrical power from outside the outer housing.

Aspect 18. The transport climate control system of any one of Aspects 14 - 17, wherein
the REPS has an output voltage of the electrical power in a range of 60V - 1500V, the REPS including a plurality of battery modules in series and one or more of the plurality of battery modules in parallel, or
the REPS has an output voltage of less than 60V, the REPS including a plurality of battery modules in parallel only.

Aspect 19. The transport climate control system of any one of Aspects 14 - 18, wherein the climate control circuit includes a compressor, the REPS configured to supply the electrical power that powers the compressor to compress working fluid in the climate control circuit, to provide the climate conditioning to the climate controlled space.

The terminology used herein is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components. In an embodiment, "connected" "connecting", and "attached" as described herein can refer to being "directly connected", "directly connecting", and "directly attached", respectively.

With regard to the preceding description, it is to be understood that changes may be made in detail, especially in matters of the construction materials employed and the shape, size, and arrangement of parts without departing from the scope of the present disclosure. This Specification and the embodiments described are exemplary only, with the true scope and spirit of the disclosure being indicated by the claims that follow.

## Claims

1. A transport climate control unit (CCU) comprising:
an internal space including a first compartment;
an outer housing containing the internal space, the first compartment defined by the outer housing;
a climate control circuit located in the internal space; and
a rechargeable electrical power source ("REPS") located in the first compartment of the outer housing, the REPS configured to supply electrical power that operates the climate control circuit to climate condition a climate controlled space.

2. The transport CCU of claim 1, wherein the REPS is configured to supply the at least 20 kilowatt hours of electrical power that operates the climate control circuit to provide the climate conditioning to the climate controlled space.

3. The transport CCU of any one of claims 1 and 2, wherein the climate control circuit includes a compressor, the REPS configured to supply the electrical power that powers the compressor to compress working fluid in the climate control circuit, to provide the climate conditioning to the climate controlled space.

4. The transport CCU of any preceding claim, wherein the REPS is configured to supply the electrical power that powers the climate control circuit operating in a cooling mode at full capacity.

5. The transport CCU of claim 4, wherein the REPS is configured to supply the electrical power that powers the climate control circuit operating in the cooling mode at the full capacity during an entirety of a state of charge of the REPS.

6. The transport CCU of any preceding claim, wherein the climate control circuit is configured to climate condition the climate controlled space using the electrical power from the REPS without receiving electrical power from outside the outer housing.

7. The transport CCU of any preceding claim, wherein the climate control circuit includes a compressor located in the first compartment.

8. The transport CCU of any preceding claim, comprising:
a thermal management system configured to circulate a coolant through the REPS, the climate control circuit being configured to selectively cool and heat the coolant circulating through the REPS.

9. The transport CCU of any preceding claim, wherein
the REPS has an output voltage of the electrical power in a range of 60V - 1500V, the REPS including a plurality of battery modules in series and one or more of the plurality of battery modules in parallel, or
the REPS has an output voltage of less than 60V, the REPS including a plurality of battery modules in parallel only.

10. The transport CCU of any preceding claim, wherein
the internal space includes a second compartment defined by the outer housing, and
the climate control circuit includes an evaporator configured to conditioned air for the climate controlled space, the evaporator located in the second compartment of the outer housing.

11. The transport CCU of any preceding claim, wherein the outer housing is formed of external panels, the one or more of the external panels defining the first compartment.

12. The transport CCU of any preceding claim, wherein the transport CCU does not contain an engine.

13. The transport CCU of any preceding claim, wherein
the internal space includes a second compartment defined by the outer housing, the first compartment spaced apart from the second compartment, and
the climate control circuit includes a compressor, the compressor disposed in the second compartment.

14. A transport climate control system, comprising:
a transport CCU as claimed in any preceding claim, wherein the outer housing of the transport CCU is attached to a transport unit, and the REPS of the transport CCU is configured to supply electrical power to the climate control circuit for operating the climate control circuit to provide climate conditioning to the climate controlled space.

15. The transport climate control system of claim 14, wherein
the REPS has an output voltage of the electrical power in a range of 60V - 1500V, the REPS including a plurality of battery modules in series and one or more of the plurality of battery modules in parallel, or
the REPS has an output voltage of less than 60V, the REPS including a plurality of battery modules in parallel only.
